# EUROPÄISCHE PATENTSCHRIFT

(11) **EP 2 300 249 B1**
(45) Veröffentlichungstag und Bekanntmachung des Hinweises auf die Patenterteilung: **16.10.2013**
(21) Anmeldenummer: 09772068.4
(22) Anmeldetag: 06.06.2009
(51) Int. Cl.: B60H 1/00

(54) **FAHRZEUG-HEIZ- UND/ODER KLIMAANLAGE MIT EINER HEIZ- UND KLIMAAUTOMATIK**
VEHICLE HEATING AND/OR AIR-CONDITIONING SYSTEM COMPRISING AN AUTOMATIC HEATING AND AIR-CONDITIONING FUNCTION
SYSTÈME DE CHAUFFAGE ET/OU DE CLIMATISATION DE VÉHICULE À FONCTION DE CHAUFFAGE ET DE CLIMATISATION AUTOMATIQUE

(30) Priorität: 04.07.2008 DE 102008031712
(43) Veröffentlichungstag der Anmeldung: 30.03.2011
(73) Patentinhaber: Bayerische Motoren Werke Aktiengesellschaft, 80809 München (DE)
(72) Erfinder: SCHNEIDER, Michael, 85293 Reichertshausen (DE); KÜNZNER, Hermann, 85356 Freising (DE)
(74) Vertreter: Wesel-Mair, Julia
(86) Internationale Anmeldenummer: PCT/EP2009/004089
(87) Internationale Veröffentlichungsnummer: WO 2010/000368

(56) Entgegenhaltungen:
- EP-A- 1 422 082
- WO-A-02/078988
- DE-A1- 4 041 193
- DE-A1- 19 958 845
- DE-U1-202006 003 543

## Beschreibung

Die Erfindung bezieht sich auf eine Fahrzeug-Heiz- und/oder Klimaanlage mit einer Heiz- und Klimaautomatik nach dem Oberbegriff des Anspruchs 1.

Derzeit sind bereits viele Kraftfahrzeuge mit einer Fahrzeug-Heiz- und/oder Klimaanlage mit einer Heiz- und Klimaautomatik bekannt, bei denen durch Betätigung einer Automatiktaste die Klimaanlagenautomatik aktiviert wird. In diesem Betriebszustand der Klimaanlage wird die gesamte Klimaaktuatorik wie z. B. das Gebläse und die Luftverteilungsklappen automatisch angesteuert. Die Ansteuerung der Aktuatorik zum Einstellen einer vom Benutzer voreingestellten Soll-Innenraumtemperatur erfolgt in Abhängigkeit eines fest hinterlegten Automatikprogramms bzw. Klimastils. Im manuellen Regelmodus, wird eine manuelle Regelung der Temperatur und der Luftmenge in Abhängigkeit von den Fahrervorgaben vorgenommen.

Aus der DE 102 54 112 A1 ist bereits eine sog. "Vier-Zonen-Klimaautomatik" für einen linken oberen, linken unteren, rechten oberen und rechten unteren Fahrgastraumbereich bekannt. Jedem dieser vier Bereiche ist ein Bedienelement zugeordnet, über das eine für diesen Bereich gewünschte Soll-Wärmeleistung ausgewählt werden kann, ohne dass der Automatikmodus verlassen wird. Zusätzlich kann mittels eines weiteren Bedienelements die in den Fahrzeuginnenraum zuzuführende Gesamtluftmenge vorgewählt werden. In Abhängigkeit von der gewählten Gesamtluftmenge und der gewählten Wärmeleistung regelt die Klimaautomatik für jeden Bereich separat die Ausströmtemperatur der Luft sowie die Luftmengenaufteilung durch Steuerung der Luftklappen an den einzelnen Luftauslässen. Der Einfachheit halber kann vorgesehen sein, dass das weitere Bedienelement zum Auswählen der gewünschten Gesamtluftmenge nur wenige Betriebsstellungen aufweist (Schwach - Mittel - Stark), d. h. jede Stellung des Bedienelements aktiviert einen der gewünschten Gesamtluftmenge entsprechenden Klimastil.

Schließlich offenbart auch die DE 103 24 571 B3 eine Fahrzeug-Heiz- und/oder Klimaanlage mit einer Heiz- und Klimaautomatik, bei der entsprechend einer voreinstellbarem Soll-Innenraumtemperatur eine Automatik-Regelung der Ist-Innenraumtemperatur durch automatische Ansteuerung eines Gebläses und der Luftverteilungsklappen erfolgt. Die Ansteuerung erfolgt in Abhängigkeit von vorgegebenen Automatik-Kennlinien, wobei eine Automatik-Kennlinie durch Betätigung eines dafür vorgesehen Bedienelements auswählbar ist. Die unterschiedlichen Automatik-Kennlinien sind dabei an das individuelle Luftzug-Empfinden des Benutzers angepasst.

Bei oben genannter Fahrzeug-Heiz- und/oder Klimaanlage kann der Benutzer bei Aktivierung des Automatikprogramms mittels eines Bedienelements die gewünschte Automatik-Kennlinie bzw. einen Klimastil auswählen, ohne das Automatikprogramm zu verlassen. Nach Auswahl einer Kennlinie erfolgt im Rahmen der Automatik-Regelung auf die gewünschte Soll-Innenraumtemperatur eine automatische Steuerung der Luftmenge und der Luftverteilungsklappen entsprechend der ausgewählten Kennlinie, d. h. es erfolgt eine unterschiedliche Steuerung der Luftmenge und der Luftverteilung, die jeweils an die Bedürfnisse des Benutzers hinsichtlich seines Luftzug-Empfindens angepasst ist. Ob und wie die vom Benutzer im Rahmen der Automatik-Regelung gewünschte Kennlinie, die seinem Luftzugempfinden entspricht dargestellt wird, ist nicht offenbart. Auch ist nicht offenbart, wie die Kennlinie ausgewählt werden kann.

Aufgabe der Erfindung ist es, eine oben beschriebenen Fahrzeug-Heiz- und/oder Klimaanlage mit einer Heiz- und Klimaautomatik hinsichtlicht der Auswahl und Anzeige eines Klimastils bzw. der dazugehörigen Kennlinie bei aktivierter Automatik-Regelung zu verbessern.

Diese Aufgabe wird durch eine Fahrzeug-Heiz- und/oder Klimaanlage mit einer Heiz- und Klimaautomatik nach Patentanspruch 1 gelöst. Vorteilhafte Weiterbildungen ergeben sich aus den abhängigen Ansprüchen.

Die Erfindung geht von einer Fahrzeug-Heiz- und/oder Klimaanlage mit einer Heiz- und Klimaautomatik aus, die in einem manuellen Regelmodus oder einem Automatik-Regelmodus betrieben werden kann. Im manuellen Regelmodus wird entsprechend einer durch den Benutzer mittels einer ersten Einstelleinrichtung zum manuellen Auswählen einer gewünschten Luftmenge aus einer vorgegebenen Anzahl von definierten Luftmengen ausgewählten Luftmenge und einer mittels einer zweiten Einstelleinrichtung zum Auswählen einer gewünschten Soll-Innenraumtemperatur ausgewählten Soll-Innenraumtemperatur eine manuelle Regelung der Ist-Innenraumtemperatur und der Luftmenge vorgenommen. Im Automatik-Regelmodus, der durch Betätigung eines Automatikbedienelements aktiviert werden kann, wird entsprechend der vom Benutzer vorgegebenen Soll-Innenraumtemperatur und eines ausgewählten Klimastils eine Automatik-Regelung der Ist-Innenraumtemperatur durch automatische Steuerung eines oder mehrerer Gebläse und von Luftverteilungsklappen entsprechend dem ausgewählten Klimastil vorgenommen. Jedem Klimastil ist eine individuelle Gebläsekennlinie und/oder eine Luftverteilungskennlinie zugeordnet, entsprechend derer die Automatik-Regelung dann erfolgt, d. h. der Benutzer kann durch Auswahl eines bestimmten Klimastils bspw. das Niveau der Luftmenge entsprechend seinen Bedürfnissen und Wünschen anpassen.

Die Erfindung gemäß Anspruch 1 zeichnet sich dadurch aus, dass die Auswahl eines Klimastils im Automatik-Regelmodus ebenfalls mit der ersten Einstelleinrichtung erfolgt, mit der im manuellen Regelmodus die Auswahl der gewünschten Luftmenge erfolgt. Dadurch kann ein zusätzliches Bedienelement eingespart werden. Weiter erscheint die Auswahl eines Klimastils während der Automatik-Regelung über die Einstelleinrichtung zum Einstellen der Luftmenge im manuellen Regelmodus besonders geeignet, da der Benutzer intuitiv auch im Automatik-Regelmodus der Klimaanlage die erste Einstelleinrichtung, also die Gebläsetaste drücken wird, wenn er das Problem hat, dass es ihm zu stark zieht. Wenn er also vermeintlich das Gebläse nach unten regelt, stellt er in Wirklichkeit einen sanfteren Klimastil ein und fühlt (und hört) auch sofort, dass das Richtige passiert: es zieht weniger. Im Hintergrund hat die Klimaautomatik jedoch nicht nur die Gebläsekennlinie, sonder auch die Luftverteilung angepasst.

In einer vorteilhaften Weiterbildung der Erfindung ist eine Anzeigeeinheit vorgesehen, in der im manuellen Regelmodus zumindest die vom Benutzer manuell ausgewählte Luftmenge und im Automatik-Regelmodus der vom Benutzer ausgewählte Klimastil darstellbar ist. Der Vorteil, dass die Anzeige des ausgewählten Klimastils ebenfalls über die Anzeige der im manuellen Regelmodus ausgewählten Luftmenge bzw. Gebläsestufe erfolgt, liegt analog zu ersten erfinderischen Vorrichtung darin, dass der Fahrer gewohnt ist, bei einer Änderung der Luftmenge dies über eine bestimmte Anzeige angezeigt zu bekommen. Durch Verwendung der gleichen Anzeige für die Darstellung der ausgewählten Luftmenge und des ausgewählten Klimastils muss sich der Fahrer nicht umgewöhnen und kann bei beiden Regel-Modusarten diese eine Anzeige als Informationsquelle für die aktuelle Luftmenge oder den aktuellen Klimastil nutzen.

Vorteilhafterweise ist im manuellen Regelmodus zumindest die vom Benutzer manuell ausgewählte Luftmenge gemäß einer ersten Darstellungsart, und im Automatik-Regelmodus der vom Benutzer ausgewählte Klimastil gemäß einer zweiten Darstellungsart in derselben Anzeigeneinheit darstellbar. Dadurch sieht der Fahrer anhand der Anzeige sofort, ob er sich im manuellen Regelmodus oder im Automatik-Regelmodus befindet.

Vorteilhafterweise sind der vom Benutzer ausgewählte Klimastil im Automatik-Regelmodus und die vom Benutzer ausgewählte Luftmenge im manuellen Regelmodus mit gleichen Leuchtsymbolen darstellbar. Dadurch entstehen keine zusätzlichen Kosten bei der Herstellung der Anzeigeeinheit.

In der ersten Darstellungsart ist vorteilhafterweise jeder definierten Luftmenge eine bestimmte Anzahl von aktivierbaren Leuchtsymbolen zugeordnet, die mit steigender Luftmenge größer wird. In Abhängigkeit der vom Benutzer manuell ausgewählten Luftmenge ist dann eine entsprechende Anzahl von Leuchtsymbolen aktiviert. Befindet sich also die Fahrzeug-Heiz- und/oder Klimaanlage nicht in einer Automatik-Regelung sondern im manuellen Regelmodus, wird entsprechend der manuell ausgewählten Luftmenge eine entsprechende Anzahl von Leuchtsymbolen aktiviert.

Im Gegensatz dazu sind in der zweiten Darstellungsart zwar die gleichen Leuchtsymbole aktivierbar, allerdings ist in dieser Darstellungsart bei aktiver Automatik-Regelung und einem vom Benutzer ausgewählten Klimastils jeden definierten Klimastil genau ein Leuchtsymbol zugeordnet. In Abhängigkeit des vom Benutzer manuell ausgewählten Klimastils ist dann nur genau eines der Leuchtsymbole aktiviert.

Vorteilhafterweise erfolgt die Auswahl eines Klimastils im Automatik-Regelmodus ebenfalls mit der ersten Einstelleinrichtung, mit der im manuellen Regelmodus die Auswahl der gewünschten Luftmenge erfolgt. Dadurch kann ein zusätzliches Bedienelement eingespart werden. Weiter erscheint die Auswahl eines Klimastils während der Automatik-Regelung über die Einstelleinrichtung zum Einstellen der Luftmenge im manuellen Regelmodus intuitiv, da diese Einstelleinrichtung im Automatik-Regelmodus nicht benötigt wird. Weiter ist die Auswahl des Klimastils indirekt eine Auswahl der Luftmenge, so dass die Zuordnung der Einstelleinrichtung zum Einstellen einer Luftmenge oder eines Gebläseniveaus ähnlich ist.

Die Erfindung wird nur anhand eines Ausführungsbeispiels näher erläutert. Dabei zeigt die
Fig. 1 eine Anzeigebedieneinheit einer Fahrzeug-Heiz- und/oder Klimaanlage mit einer Anzeigeeinheit, in der die ausgewählte Luftmenge in einer ersten Darstellungsart angezeigt ist, und
Fig. 2 die in der Fig. 1 dargestellte Anzeigebedieneinheit, in der der ausgewählte Klimastil in einer zweiten Darstellungsart angezeigt ist.

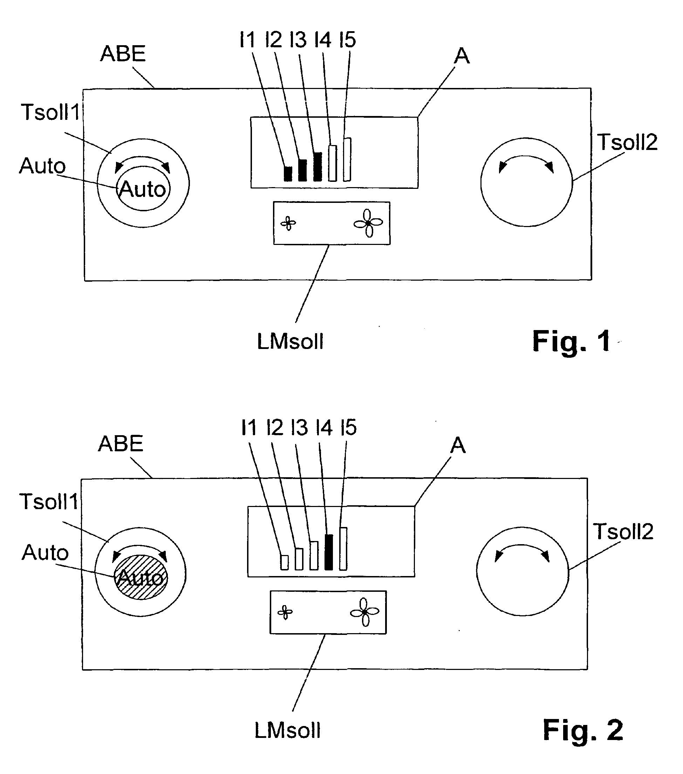

Beide Fig. 1 und 2 zeigen eine Anzeigebedieneinheit ABE einer nicht näher dargestellten Fahrzeug- Heiz- und/oder Klimaanlage wie sie oben beschrieben ist. Die Anzeigebedieneinheit ABE umfasst eine erste Einstelleinrichtung LMsoll zum Auswählen einer gewünschten Luftmenge aus einer vorgegebenen Anzahl von definierten Luftmengen und zum Auswählen eines Klimastils aus einer vorgegebenen Anzahl von definierten Klimastilen. In diesem Beispiel kann der Benutzer aus fünf verschiedenen Luftmengen und Klimastilen wählen. Weiter umfasst die Anzeigebedieneinheit ABE eine zweite Einstelleinrichtung, bestehend aus einem ersten Temperaturregler Tsoll1 für die Fahrerseite, und einem zweiten Temperaturregler Tsoll2 für die Beifahrerseite des Fahrzeugs. Mittels dieser Regler Tsoll1 und Tsoll2 kann der Benutzer durch Drehen eine gewünschte Soll-Innenraumtemperatur für die Fahrerseite und für die Beifahrerseite auswählen. Im Rahmen der "manuellen" Regelung (d. h. eine Automatik-Regelung ist nicht aktiv) werden für beide Bereiche die gewünschte Solltemperatur und die gewünschte Luftmenge eingeregelt.

Weiter umfasst die Anzeigebedieneinheit ABE ein Automatikbedienelement Auto, welches in den ersten Temperaturregler Tsoll1 integriert ist und bei dessen Betätigung (Drücken des Reglers) entsprechend eines im Hintergrund automatisch vorgegebenen Klimastils oder eines der durch den Fahrer manuell ausgewählten Klimastils und der Soll-Innenraumtemperatur eine Automatik-Regelung der Ist-Innenraumtemperatur durch automatische Steuerung eines oder mehrerer Gebläse und von Luftverteilungsklappen erfolgt.

Schließlich umfasst die Anzeigebedieneinheit ABE noch eine Anzeigeeinheit A in der zumindest die manuell ausgewählte Luftmenge während des manuellen Regelmodus, und der ausgewählte Klimastil während des Automatik-Regelmodus darstellbar ist. In der Anzeigeneinheit A sind entsprechend der Anzahl der definierten auswählbaren Luftmengen fünf Leuchtsymbole I1 - I5 in Form von Rechtecken dargestellt, die von links nach rechts in ihrer Größe zunehmen.

In der Fig. 1 ist nun eine erste Darstellungsart der manuell ausgewählten Luftmenge dargestellt, welche erscheint, wenn die Automatik-Regelung nicht aktiv ist und somit eine manuelle Regelung der Luftmenge auf die manuell ausgewählte Luftmenge erfolgt. In dieser ersten Darstellungsart ist in Abhängigkeit der vom Benutzer manuell ausgewählten Luftmenge eine entsprechende Anzahl von Leuchtsymbolen aktiviert, d. h. jeder der definierten auswählbaren Luftmenge ist eine bestimmte Anzahl an Leuchtsymbolen zugeordnet, die bei Auswahl der entsprechenden Luftmenge aktiviert, also z. B. beleuchtet wird. In diesem Beispiel sind drei der fünf Leuchtsymbole aktiv, d. h. der Benutzer hat die dritte der fünf definierten auszuwählenden Luftmengen ausgewählt.

Im Gegensatz dazu befindet sich in Fig. 2 die Fahrzeug-Heiz- und/oder Klimaanlage in einem Automatik-Regelungsmodus, der hier durch das schraffierte Automatikbedienelement kenntlich gemacht wurde. In dieser zweiten Darstellungsart ist in Abhängigkeit des vom Benutzer manuell ausgewählten Klimastils, durch den eine den Bedürfnissen des Benutzers entsprechende Gebläsekennlinie und Luftverteilungskennlinie auswählbar ist, genau eines der Leuchtsymbole I1 - I5 aktiviert, und zwar dasjenige, das bei der ersten Darstellungsart beim Umschalten von einer niedrigeren Luftmenge in die nächst höhere Luftmenge zusätzlich aktiviert werden würde. In diesem Beispiel ist das vierte Leuchtsymbol 14 von links aktiv, d. h. der Benutzer hat den vierten der fünf definierten auszuwählenden Klimastile ausgewählt. Die Kennzeichnung der aktiven Automatik-Regelung durch das Automatikbedienelement (schraffierte Fläche) kann somit bei einer derartigen Fahrzeug-Heiz- und/oder Klimaanlage prinzipiell entfallen, da der Fahrer durch die zweite Darstellungsart der ausgewählten Luftmenge darüber informiert ist, dass bei der Fahrzeug-Heiz- und/oder Klimaanlage die Automatik-Regelung aktiv ist.

## Patentansprüche

1. Fahrzeug-Heiz- und/oder Klimaanlage mit einer Heiz- und Klimaautomatik, bei der in einem manuellen Regelmodus entsprechend einer durch den Benutzer mittels einer ersten Einstelleinrichtung (LMsoll) einstellbaren Luftmenge aus einer vorgegebenen Anzahl von definierten Luftmengen und mittels einer zweiten Einstelleinrichtung (Tsoll1, Tsoll2) einstellbaren Soll-Innenraumtemperatur eine manuelle Regelung der Ist-Innenraumtemperatur und der Luftmenge erfolgt, und bei der in einem Automatik-Regelmodus entsprechend der durch den Benutzer einstellbaren Soll-Innenraumtemperatur und eines ausgewählten Klimastils aus einer vorgegebenen Anzahl von Klimastilen eine Automatik-Regelung der Ist-Innenraumtemperatur durch Ansteuerung eines oder mehrerer Gebläse und von Luftverteilungsklappen entsprechend des ausgewählten Klimastils erfolgt, wobei jedem Klimastil eine Gebläsekennlinie und/oder Luftverteilungskennlinie zugeordnet ist, entsprechend der die Automatik-Regelung erfolgt, **dadurch gekennzeichnet, dass** die Auswahl eines Klimastils im Automatik-Regelmodus mit der ersten Einstelleinrichtung (LMsoll) erfolgt.

2. Fahrzeug-Heiz- und/oder Klimaanlage nach Anspruch 1, **dadurch gekennzeichnet, dass** eine Anzeigeeinheit (A) vorgesehen ist, in der im manuellen Regelmodus zumindest die vom Benutzer manuell ausgewählte Luftmenge und im Automatik-Regelmodus der vom Benutzer ausgewählte Klimastil (14) darstellbar ist.

3. Fahrzeug-Heiz- und/oder Klimaanlage nach Anspruch 2, **dadurch gekennzeichnet, dass** im manuellen Regelmodus zumindest die vom Benutzer manuell ausgewählte Luftmenge gemäß einer ersten Darstellungsart (I1, I2, I3) darstellbar ist, und im Automatik-Regelmodus der vom Benutzer ausgewählte Klimastil gemäß einer zweiten Darstellungsart (I4) darstellbar ist.

4. Fahrzeug-Heiz- und/oder Klimaanlage nach Anspruch 2 oder 3, **dadurch gekennzeichnet, dass** der vom Benutzer ausgewählte Klimastil im Automatik-Regelmodus und die vom Benutzer ausgewählte Luftmenge im manuellen Regelmodus mit gleichen Leuchtsymbolen (I1 - I5) darstellbar sind.

5. Fahrzeug-Heiz- und/oder Klimaanlage nach Anspruch 3 oder 4, **dadurch gekennzeichnet, dass** in der ersten Darstellungsart eine mit der Anzahl der definierten Luftmengen identische Anzahl an Leuchtsymbolen (I1 - I5) aktivierbar ist und jeder definierten Luftmenge eine bestimmte Anzahl von Leuchtsymbolen (I1 - I5) zugeordnet ist, die mit steigender auszuwählender Luftmenge größer wird, und dass in Abhängigkeit der vom Benutzer manuell ausgewählten Luftmengen eine entsprechende Anzahl von Leuchtsymbolen (I1. I2. I3) aktiviert ist.

6. Fahrzeug-Heiz- und/oder Klimaanlage nach einem Ansprüche 3-5, **dadurch gekennzeichnet, dass** in der zweiten Darstellungsart jedem definierten Klimastil genau ein Leuchtsymbol (I1 - I5) aus einer vorgegebenen Anzahl von Leuchtsymbolen (I1 - I5) zugeordnet ist, wobei die Anzahl der Leuchtsymbole (I1 - I5) der Anzahl der definierten Klimastile entspricht, und dass in Abhängigkeit des vom Benutzer manuell ausgewählten Klimastils nur das diesem ausgewählten Klimastil zugeordnetes Leuchtsymbol (I4) aktiviert ist.

## Claims

1. A vehicle heating and/or air-conditioning system with an automatic heating and air-conditioning function, wherein a manual control of the actual internal temperature and the air quantity takes place in a manual control mode in accordance with an air quantity settable by the user by means of a first setting device (LMdesired) from a predetermined number of defined air quantities and a desired internal temperature settable by means of a second setting device (Tdesired1, Tdesired2), and wherein, in an automatic control mode corresponding to the desired internal temperature settable by the user and a selected air-conditioning style from a predetermined number of air-conditioning styles, an automatic control of the actual internal temperature takes place by activating one or more fans and air distribution flaps in accordance with the selected air-conditioning style, each air-conditioning style being assigned a fan characteristic curve and/or air distribution characteristic curve, according to which the automatic control takes place, **characterised in that** the selection of an air-conditioning style takes place in the automatic control mode with the first setting device (LMdesired).

2. A vehicle heating and/or air-conditioning system according to claim 1, **characterised in that** a display unit (A) is provided, in which, in the manual control mode, at least the air quantity selected manually by the user can be displayed and, in the automatic control mode, the air-conditioning style (I4) selected by the user can be displayed.

3. A vehicle heating and/or air-conditioning system according to claim 2, **characterised in that** in the manual control mode, at least the air quantity selected manually by the user can be displayed according to a first display type (I1, I2, I3), and, in the automatic control mode, the air-conditioning style selected by the user can be displayed according to a second display type (I4).

4. A vehicle heating and/or air-conditioning system according to claim 2 or 3, **characterised in that** the air-conditioning style selected by the user can be displayed in the automatic control mode and the air quantity selected by the user can be displayed in the manual control mode with the same light symbols (I1 to I5).

5. A vehicle heating and/or air-conditioning system according to claim 3 or 4, **characterised in that** in the first display type, a number of light symbols (I1 to I5) identical to the number of defined air quantities can be activated and each defined air quantity is assigned a specific number of light symbols (I1 to I5), which becomes larger with an increasing air quantity to be selected, and **in that** a corresponding number of light symbols (I1, I2, I3) is activated depending on the air quantities manually selected by the user.

6. A vehicle heating and/or air-conditioning system according to any one of claims 3 to 5, **characterised in that**, in the second display type, each defined air-conditioning style is assigned precisely one light symbol (I1 to I5) from a predetermined number of light symbols (I1 to I5), the number of light symbols (I1 to I5) corresponding to the number of defined air-conditioning styles, and **in that**, depending on the air-conditioning style manually selected by the user, only the light symbol (I4) assigned to this selected air-conditioning style is activated.

## Revendications

1. Installation de chauffage et/ou de climatisation d'un véhicule comprenant un système de chauffage et de climatisation automatique dans laquelle, dans un mode de régulation manuelle, en fonction d'un débit d'air pouvant être réglé par l'utilisateur au moyen d'un premier dispositif de réglage (LMsoll) à partir d'un nombre prédéfini de débits définis, et d'une température de l'habitacle de consigne pouvant être réglée au moyen d'un second dispositif de réglage (Tsoll1, Tsoll2), on effectue un réglage manuel de la température réelle de l'habitacle et du débit d'air, et, dans un mode de régulation automatique, en fonction de la température de l'habitacle de consigne pouvant être réglée par l'utilisateur et d'un genre de climatisation choisi à partir d'un nombre prédéfini de genres de climatisation, on effectue un réglage automatique de la température réelle de l'habitacle par commande d'un ou de plusieurs ventilateurs et de volets de distribution de l'air en fonction du genre de climatisation choisi, à chaque genre de climatisation étant associée une caractéristique de ventilateur et/ou une caractéristique de répartition de l'air conformément à laquelle s'effectue la régulation,
**caractérisée en ce que**
le choix d'un genre de climatisation est effectué dans le mode de régulation automatique avec le premier dispositif de réglage (LMsoll).

2. Installation de chauffage et/ou de climatisation d'un véhicule conforme à la revendication 1,
**caractérisée en ce qu'**
elle comporte une unité d'affichage (A) dans laquelle, dans le mode de régulation manuelle, au moins le débit d'air choisi manuellement par l'utilisateur, et dans le mode de régulation automatique, le genre de climatisation choisi par l'utilisateur peut être représenté.

3. Installation de chauffage et/ou de climatisation d'un véhicule conforme à la revendication 2,
**caractérisée en ce que**
dans le mode de régulation manuelle, au moins le débit d'air choisi manuellement par l'utilisateur peut être représenté conformément à un premier type de représentation (11, 12, 13) et, dans le mode de régulation automatique, le genre de climatisation choisi par l'utilisateur peut être représenté conformément à un second type de représentation (14).

4. Installation de chauffage et/ou de climatisation d'un véhicule conforme à la revendication 2 ou 3,
**caractérisée en ce que**
le genre de climatisation choisi par l'utilisateur dans le mode de régulation automatique et le débit d'air choisi par l'utilisateur dans le mode de régulation manuelle peuvent être représentés par des mêmes symboles lumineux (11-15).

5. Installation de chauffage et/ou de climatisation d'un véhicule conforme à la revendication 3 ou 4,
**caractérisée en ce que**
dans le premier type de représentation, un nombre de symboles lumineux (11-15) identique au nombre de débits d'air définis, peut être activé et à chaque débit d'air défini peut être associé un nombre défini de symboles lumineux (11-15) augmentant lorsque le débit choisi augmente, et, en fonction des débits d'air choisis manuellement par l'utilisateur, un nombre correspondant de symboles lumineux (11, 12, 13) est activé.

6. Installation de chauffage et/ou de climatisation d'un véhicule conforme à la revendication 2,
**caractérisée en ce que**
dans le second type de représentation, à chaque genre de climatisation défini est précisément associé un symbole lumineux (11-15) parmi un nombre prédéfini de symboles lumineux (11-15), le nombre de symboles lumineux (11-15) correspondant au nombre de genres de climatisation définis, et en fonction du genre de climatisation choisi manuellement par l'utilisateur, seul est activé le symbole lumineux (14) associé au genre de climatisation ainsi choisi.
